# EUROPÄISCHE PATENTSCHRIFT

(11) **EP 0 982 509 B1**
(45) Veröffentlichungstag und Bekanntmachung des Hinweises auf die Patenterteilung: **20.10.2004**
(21) Anmeldenummer: 99115859.3
(22) Anmeldetag: 12.08.1999
(51) Int. Cl.: F16C 29/06

(54) **Linearbewegungsführung**
Linear motion guide
Palier linéaire

(30) Priorität: 27.08.1998 CH 175498
(43) Veröffentlichungstag der Anmeldung: 01.03.2000
(73) Patentinhaber: Schneeberger Holding AG, 4914 Roggwil (CH)
(72) Erfinder: Mischler, Ernst, 4914 Roggwil (CH)
(74) Vertreter: EGLI-EUROPEAN PATENT ATTORNEYS

(56) Entgegenhaltungen:
- EP-A- 0 124 648
- EP-A- 0 802 337
- EP-A- 0 845 611
- DE-A- 3 604 283
- DE-A- 3 931 351
- US-A- 4 798 479
- US-A- 5 492 413
- US-A- 5 544 954

## Beschreibung

Die Erfindung betrifft einen Wagen einer Linearbewegungsführung, welcher zur Anordnung auf einer Schiene vorgesehen ist, der einen Mittelabschnitt und zwei sich jeweils an den Mittelabschnitt anschliessende Schenkel aufweist, wodurch der Wagen im Querschnitt im wesentlichen U-förmig ausgebildet ist und eine zur vorgesehenen Längsbewegungsachse parallel verlaufende Ausnehmung aufweist. Der Wagen weist im Bereich der beiden Schenkel zumindest jeweils einen Wälzkörperumlauf auf, wobei jeder Wälzkörperumlauf mit einem Rücklaufkanal, einen Tragbereich sowie zwei den Rücklaufkanal und den Tragbereich miteinander verbindende Umlenkkanäle versehen ist.

Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Ein Beispiel hierfür sind Werkzeugmaschinen. Derartige Führungen weisen einen Wagen oder Schlitten auf, der über Wälzkörper, wie Kugeln, Rollen oder Nadeln, an einer Schiene geführt ist. Die Wälzkörper zirkulieren hierbei in in sich geschlossenen Wälzkörperumläufen des Wagens. Sie weisen üblicherweise eine Tragzone auf, in welcher die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals erreichen die Wälzkörper über einen zweiten Umlenkkanal wieder die Tragzone.

In vielen Fällen werden die Umlenkkanäle von einer jeweils stirnseitig an einen Grundkörper des Wagens angesetzte und dort befestigte Bauteilgruppe gebildet, die zumindest teilweise die erforderliche Führungsmittel zur Umlenkung enthalten. In der Regel enthält diese Bauteilgruppe Führungsmittel von sämtlichen an der jeweiligen Stirnseite angeordneten Umlenkungen. Ausserdem kann in die Bauteilgruppe auch ein Abstreifer integriert sein, mit dem das Eindringen von Schmutz in den Wagen verhindert werden soll.

Es sind bereits einige miniaturisierte Linearbewegungsführungen bekannt geworden, die häufig im Halbleitermaschinenbereich eingesetzt werden. Bei diesen Linearbewegungsführungen ist in der Regel an jedem Schenkel des Wagens nur ein Wälzkörperumlauf vorhanden, da sich bereits hiermit die auftretenden Lasten abtragen lassen. Ansonsten wird die Miniaturisierung dieser Linearbewegungsführungen dadurch erreicht, dass man die weitverbreiteten grösseren Linearbewegungsführungen - sonst im wesentlichen konstruktiv - unverändert in einem kleineren Massstab realisiert. Dies hat jedoch den Nachteil, dass die Wagen konstruktiv verhältnismässig aufwendig aufgebaut sind, da relativ viele Bauteile benötigt werden. Da sich die Fertigungstoleranzen der einzelnen Bauteile aufaddieren, müssen an die einzelnen Bauteile vergleichsweise hohe Anforderungen an die Fertigungsgenauigkeit gestellt werden. Aufgrund der geringen Grösse der Wagen wären die Genauigkeitsanforderungen an sich jedoch einfacher einzuhalten, als bei grösseren Linearbewegungsführungen.

Bei vielen der vorbekannten Linearbewegungsführungen kann auch nicht überzeugen, dass für unterschiedliche Breiten von Wagen jeweils ein gesondertes stirnseitiges Bauteil für die Rückführungen konstruiert, gefertigt und eventuell bevorratet werden muss. Dies ist jedoch erforderlich, da die stirnseitigen Bauteile, welche Führungsmittel für Umlenkungen enthalten, jeweils auf eine bestimmte Wagenbreite abgestimmt sind.

In der EP-A-0 124 648 wird eine Linearbewegungsführung aufgezeigt, bei der die Massnahmen gemäss dem Oberbegriff des Anspruchs 1 ausgeführt werden, die aber nicht die nachfolgend aufgezeigte Aufgabe der Erfindung zu lösen in der Lage ist.

Ähnlicher Stand der Technik ist aus der EP-A-0 845 611 bekannt.

Der Erfindung liegt die Aufgabe zugrunde, einen Wagen einer Linearbewegungsführung, insbesondere für kleine Linearbewegungsführungen, zu schaffen, der konstruktiv einfach aufgebaut ist und der sich mit wenigen Fertigungsschritten realisieren lässt.

Diese Aufgabe wird bei einem eingangs erwähnten Wagen erfindungsgemäss dadurch gelöst, dass zumindest ein Schenkel eine Nut aufweist, die im wesentlichen quer zur Ausnehmung verläuft, und dass in die Nut ein Einsatz einfügbar ist, welcher Mittel zur Umlenkung der Wälzkörper enthält. Die Erfindung lässt sich jedoch nicht nur bei einen Wagen einer Linearbewegungsführung einsetzen. Sie kann bei nahezu jeder Führung verwendet werden, bei der Wälzkörper in einem Wälzkörperumlauf mit einem Tragbereich, einem Rücklaufkanal sowie zwei den Tragbereich und den Rücklaufkanal miteinander verbindende Umlenkkanäle zirkulieren.

Ein Vorteil der erfindungsgemässen Lösung besteht insbesondere darin, dass sie die Möglichkeit bietet, mit ein und denselben Umlenkkörpern Wagen von beliebiger Breite und Länge bilden zu können. Es ist somit möglich, mit weniger unterschiedlichen Bauteilen als bisher Wagen mit unterschiedlicher Grösse zu bilden. Diese Reduzierung der hierfür erforderlichen Bauteile senkt den Fertigungsaufwand ganz erheblich.

Der Grundkörper eines erfindungsgemässen Wagens lässt sich besonders einfach und kostengünstig herstellen, wenn die zumindest eine Nut im wesentlichen quer zur Ausnehmung verläuft, wobei die Nut von zwei im wesentlichen orthogonal zur Längsbewegungsachse ausgerichtete Seitenflächen des Grundkörpers begrenzt wird. Eine derartige Nut kann nämlich mit einem herkömmlichen Fräswerkzeug erzeugt werden.

Zur Reduzierung der erforderlichen Bauteile trägt auch dazu bei, wenn die für einen Wälzkörperumlauf vorgesehenen erfindungsgemässen Umlenkkörper einteilig ausgebildet sind. Es hat sich als günstig erwiesen, wenn die Umlenkkörper in einem Kunststoffspritzgiessverfahren hergestellt werden. Ausser aus Kunststoff könnten diese jedoch auch aus Stahl oder anderen Metallen bestehen, was insbesondere für Anwendungen im Vakuumbereich zweckmässig sein kann.

Ein weiterer Vorteil der Erfindung kann darin gesehen werden, dass sich die im Umlenkbereich von den Wälzkörpern auf einen Umlenkkörper wirkenden Kräfte besonders gut in den Wagen ableiten lassen. Diese Kräfte wirken nämlich vor allem parallel zur Längsbewegungsachse. Da die erfindungsgemäss im Grundkörper des Wagens vorgesehene Nut von vertikal zur Längsbewegungsachse ausgerichteten Seitenwänden des Grundkörpers begrenzt wird, können die Kräfte über die Seitenwände abgeleitet werden. Erfindungsgemässe Wagen können deshalb besonders robust sein.

Um den Fertigungs- und Montageaufwand weiter zu reduzieren, kann es zweckmässig sein, wenn die Umlenkkörper als in die jeweilige Nut einzufügende Einsätze ausgebildet sind, die am Grundkörper lediglich durch eine Schnappverbindung befestigbar sind.

Es hat sich ferner als vorteilhaft erwiesen, wenn der Einsatz mit Zentriermitteln versehen ist, mit denen der Umlenkkanal zu der Tragzone und dem Rücklaufkanal in vorbestimmter Weise ausgerichtet werden kann.

Ein weiterer Vorteil kann dadurch erzielt werden, dass die Abstreifer von den Umlenkkörpern getrennte Bauteile sind. Dadurch ist es möglich die verschleissanfälligen Abstreifer auszutauschen, ohne die Umlenkkörper wechseln zu müssen.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine perspektivische Darstellung einer erfindungsgemässen Linearbewegungsführung;
- Fig. 2: ein teilweise montierter Wagen der Linearbewegungsführung aus Fig. 1 in einer Teilansicht;
- Fig. 3: ein Grundkörper des Wagens von Fig. 1 in einer perspektivischen Darstellung;
- Fig. 4: ein Sicherungsbügel des Wagens von Fig.1;
- Fig. 5: ein Umlenkkörper in einer perspektivischen Darstellung;
- Fig. 6: eine Deckplatte mit einem Abstreifer in einer perspektivischen Darstellung.
- Fig. 7: ein Teil einer Längsschnittdarstellung eines erfindungsgemässen Wagens.

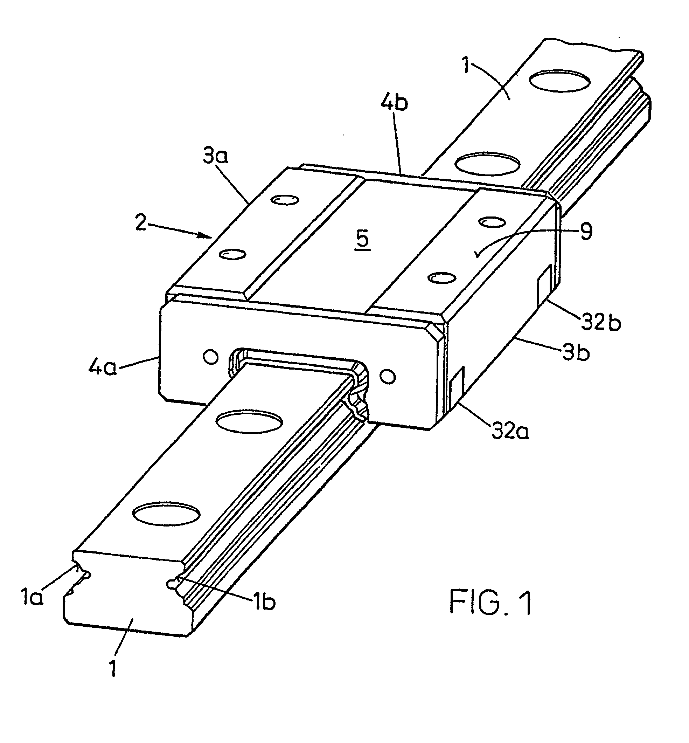

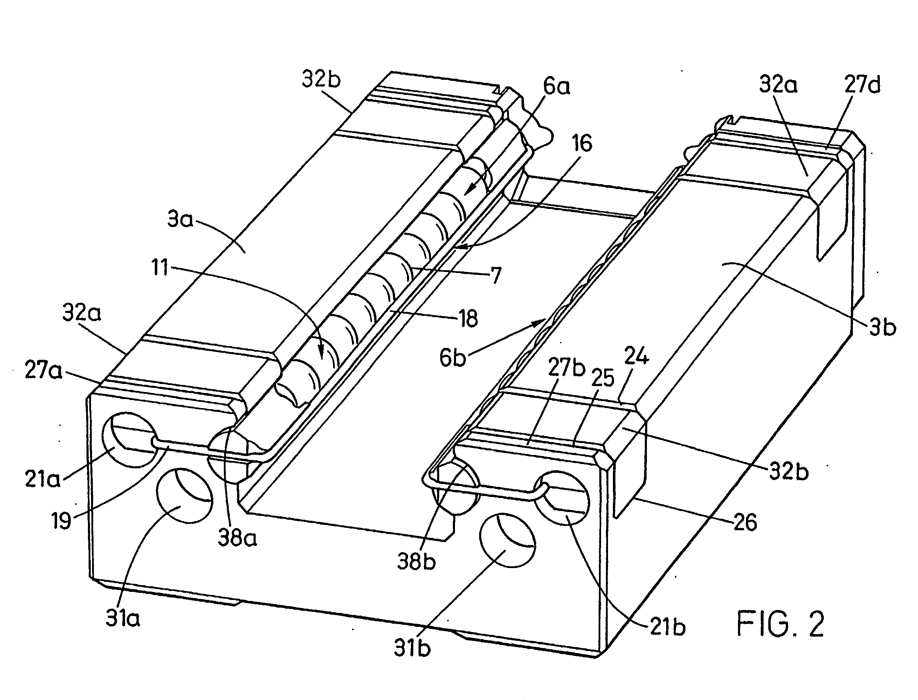

In Fig. 1 ist eine Linearbewegungsführung gezeigt, die eine profilierte Führungsschiene 1 aufweist, auf der sich ein Wagen 2 abstützt und längsverschiebbar angeordnet ist. Wie auch Fig. 2 entnommen werden kann, ist der Wagen 2 im Querschnitt im wesentlichen U-förmig ausgebildet und umgreift mit zwei sich an einen Mittelabschnitt anschliessenden Schenkeln 3a, 3b die Schiene 1. An den Stirnseiten des Wagens sind Deckplatten 4a, 4b angebracht, die an einem metallischen Grundkörper 5 des Wagens lösbar befestigt sind. Eine Oberseite des Wagens 2 ist als Montagefläche 9 vorgesehen, auf der eine zu bewegende Last befestigt werden kann.

Der Wagen stützt sich über Wälzkörper 7, die in zwei jeweils in sich geschlossenen Umläufen 6a, 6b angeordnet sind, auf seitlichen Tragflächen 1a, 1b der Führungsschiene 1 ab. Im dargestellten Ausführungsbeispiel sind als Wälzkörper 7 Kugeln vorgesehen. Die Tragflächen 1a, 1b der Schiene sind profiliert, so dass eine Linienberührung zwischen den Kugeln und der Führungsschiene entsteht.

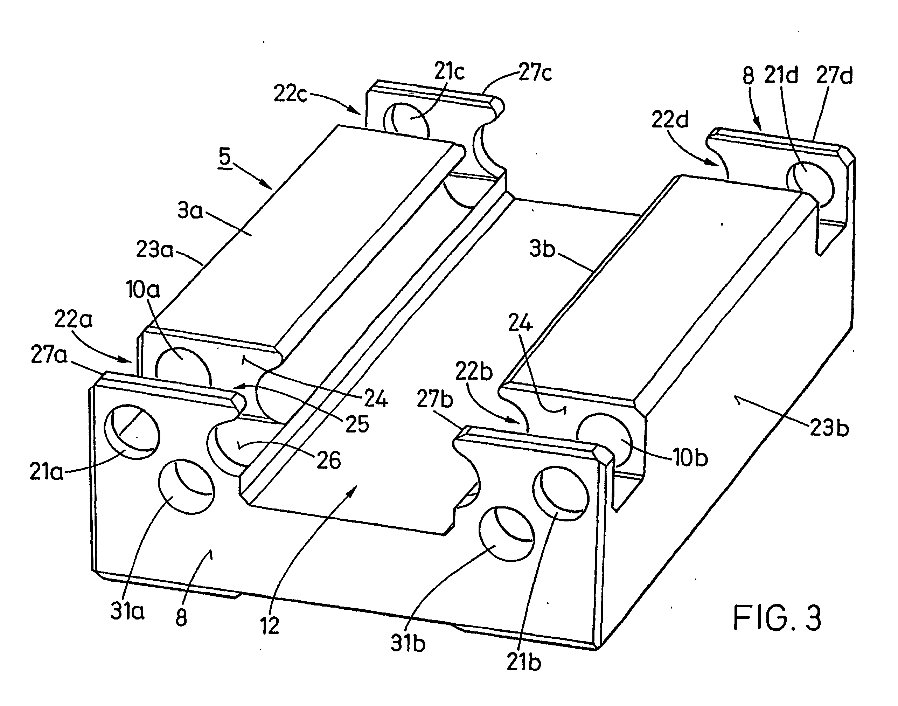

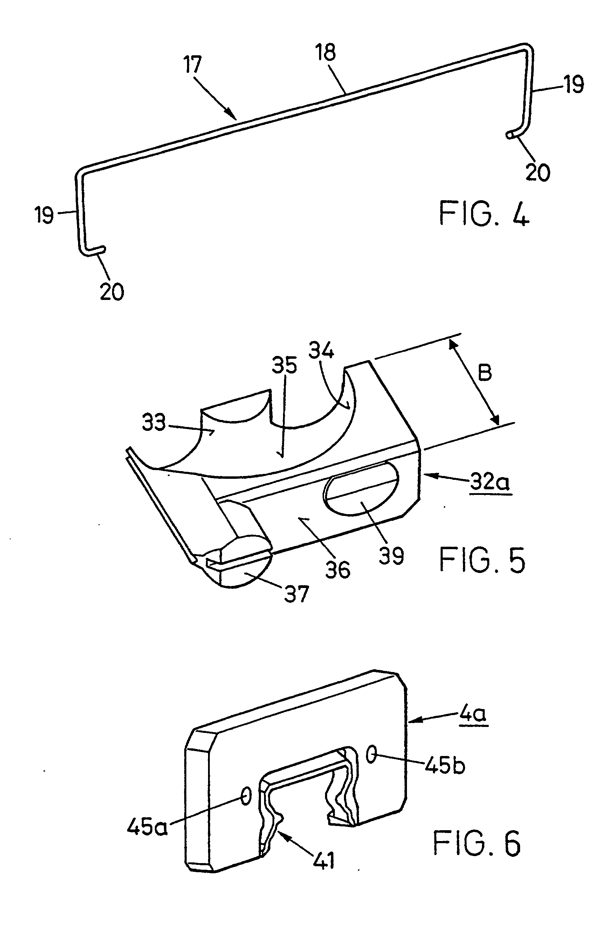

Im metallischen Grundkörper 5 sind zwei zylindrische Ausnehmungen 10a, 10b (vgl. Fig. 3) eingebracht, deren jeweilige Längsachse parallel zur Längsbewegungsachse der Schiene 1 verläuft. Jede dieser Ausnehmungen 10a, 10b ist Bestandteil von einem der Wälzkörperumläufe 6a, 6b, die zudem jeweils eine Tragzone 11 und zwei jeweils die Enden der Ausnehmungen 10a, 10b und der Tragzone miteinander verbindende Umlenkkanäle aufweisen. In der Darstellung von Fig. 2 ist zu erkennen, dass in der Tragzone 11 ein Rückhaltemittel 16 vorhanden ist, mit dem die als Wälzkörper 7 vorgesehenen Kugeln einerseits geführt und andererseits vor einem Herausfallen aus dem Wagen 2 gehindert werden. Ein solches Rückhaltemittel 16 kann ein in Fig. 4 näher dargestellter Sicherungsbügel 17 sein, der einen parallel zur Längsbewegungsachse verlaufenden Rückhaltesteg 18 sowie zwei sich an die Enden anschliessende Befestigungsstege 19 aufweist. Der Sicherungsbügel 17 ist durch die beiden Befestigungsstege 19 an den Stirnseiten 8 des Grundkörpers 5 lösbar befestigt, wozu endseitige und im wesentlichen parallel zum Rückhaltesteg 18 verlaufende Haltenase 20 der Befestigungsstege in entsprechende Ausnehmungen 21a, 21b des Grundkörpers 5 eingreifen. Der Sicherungsbügel 17 besteht vorzugsweise aus einem federelastischen Material.

Fig. 2 und Fig. 3 kann entnommen werden, dass der Grundkörper 5 des Wagens im Bereich der beiden Enden jedes Schenkels 3a, 3b jeweils eine Nut 22a, 22b, 22c, 22d aufweist. Die Nuten 22a - 22d sind jeweils zur axialen Ausnehmung 12 und zu seitlichen Aussenflächen 23a, 23b des Wagens hin offen und weisen jeweils zwei ebene Seitenflächen 24, 25 und eine zu diesen orthogonal ausgerichtete ebene Nutgrundfläche 26 auf.

Weil die ebenen Seitenflächen 24, 25, welche die Nuten 22a - 22d jeweils begrenzen, orthogonal zur Längsbewegungsachse ausgerichtet sind, ergibt sich, dass die Nuten 22a - 22d auch jeweils orthogonal zur Ausnehmung 12 verlaufen. Zwischen der jeweils äusseren Seitenfläche 25 jeder Nut 22a - 22d und den Stirnflächen 8 des Grundkörpers befindet sich somit jeweils nur ein Steg 27a - 27d von vergleichsweise geringer Breite. Da die Bohrungen für die Ausnehmungen 10a, 10b der beiden Rücklaufkanäle eingebracht werden, bevor die Nuten 22a - 22d gefräst werden, ist auch in jedem Steg 27a-27d eine durchgehende Ausnehmung 21a- 21d vorhanden, deren Längsachse mit der Längsachse des jeweiligen Rücklaufkanals fluchtet. Nachdem auch vor der Erzeugung der vier Nuten 22a - 22d an den Innenseiten der Schenkel 3a, 3b über deren gesamte Länge die im Querschnitt kreisbogenförmigen Laufflächen der Tragzone bearbeitet werden, weisen auch die Stege 27a- 27b jeweils an ihren Innenseiten eine der Tragflächen entsprechende Kontur auf. Schliesslich ist an jedem Steg 27a - 27b eine weitere Ausnehmung 31a - 31d vorhanden, deren Funktion nachfolgend noch erläutert wird.

In Fig. 5 ist nun ein als einstückiger Einsatz 32a ausgebildeter Umlenkkörper gezeigt, der in zwei sich diagonal gegenüberliegenden Nuten 22a, 22d des Grundkörpers einsetzbar ist. In die beiden anderen Nuten 22b, 22c ist ein zum dargestellten Einsatz 32a spiegelbildlich aufgebauter zweiter Typ von Einsatz vorgesehen, der in Fig. 2 mit 32b bezeichnet ist. Die Einsätze 32a, 32b werden vorzugsweise in einem Kunststoffspritzgiessverfahren hergestellt.

Der Einsatz 32a von Fig. 5 weist eine entlang eines Kreisbogens von in etwa 180° verlaufende innere sowie eine äussere Führungsfläche 33, 34 auf, die sich ebenfalls entlang eines Kreisbogens von etwa 180° erstreckt. Diese beiden Führungsflächen 33, 34 werden durch eine untere Führungsfläche 35 miteinander verbunden, wobei die Übergänge von Führungsfläche zu Führungsfläche stetig ausgebildet sind. Nach oben wird der Rücklaufkanal durch eine der Nutgrundflächen 26 begrenzt (vgl. Fig. 2). Sämtliche drei Führungsflächen 33, 34, 35 erstrecken sich über den gesamten Rücklaufkanal. An dem Einsatz 32a sind somit sämtliche Führungsflächen des Rücklaufkanals enthalten.

Der Einsatz 32a weist ferner an einer Fläche 36, die zur Anlage an der äusseren Seitenfläche 25 einer Nut vorgesehen ist, eine Zentriernase 37 auf. Die Zentriernase hat eine zur Lauffläche der Tragzone komplementäre Aussenfläche, so dass letztere in die aufgrund der Erzeugung der Tragfläche auch an jedem Steg vorhandene Einkerbung 38a - 38d einsetzbar ist. An einer Stirnseite der Zentriernase ist ein Schlitz eingebracht, der zur Aufnahme eines Befestigungssteges 19 des Sicherungsbügels 17 vorgesehen ist.

Ausserdem weist der Einsatz 32a an der gleichen Fläche ein Zentrierauge 39 auf, das in die jeweilige Bohrung 21a - 21d des Steges einschnappt. Die jeweilige Bohrung 21a - 21d und das entsprechende Zentrierauge 39 bilden somit eine Schnappverbindung, wobei eine Breite B des Einsatzes und eine maximale Höhe des Zentrierauges gegenüber der Fläche 36 so bemessen ist, dass es nur aufgrund einer elastischen Verformung in die Nut 22a - 22d einfügbar ist. Um das Einfügen des Einsatzes 32a in die jeweilige Nut 22a, 22d zu erleichtern, kann das Zentrierauge 39 eine in Einfügrichtung geneigte Schräge mit einem Neigungswinkel von beispielsweise 7° aufweisen. Nachdem das Zentrierauge eine Lage direkt gegenüber der Bohrung 21a - 21d erreicht hat, schnappt es in diese ein. Der Abstand des Zentrierauges 39 von der Zentriernase 37 ist geringfügig kleiner als der Abstand der Bohrung 21a - 21d von der Einkerbung 38a - 38d. Dadurch entsteht im Einsatz zwischen dem Zentrierauge 39 und der Zentriernase 37 im wesentlichen eine Zugspannung, die den Einsatz 32a gegenüber der Lauffläche und der Ausnehmung 10a, 10b für die Rücklaufkanäle zentriert und in der jeweiligen Nut 22a, 22d fixiert.

In Fig. 6 ist eine Deckplatte 4a gezeigt, in die jeweils ein Abstreifer 41 integriert ist, der zur Entfernung von auf der Führungsschiene befindlichem Schmutz dient. Der Abstreifer weist dazu eine Kontur auf, die im wesentlichen der Querschnittskontur der Schiene entspricht. Die gezeigte Deckplatte kann an jeder der beiden Stirnseiten befestigt werden. Die Rückführungen und die Abstreifer sind somit voneinander getrennte Bauteile.

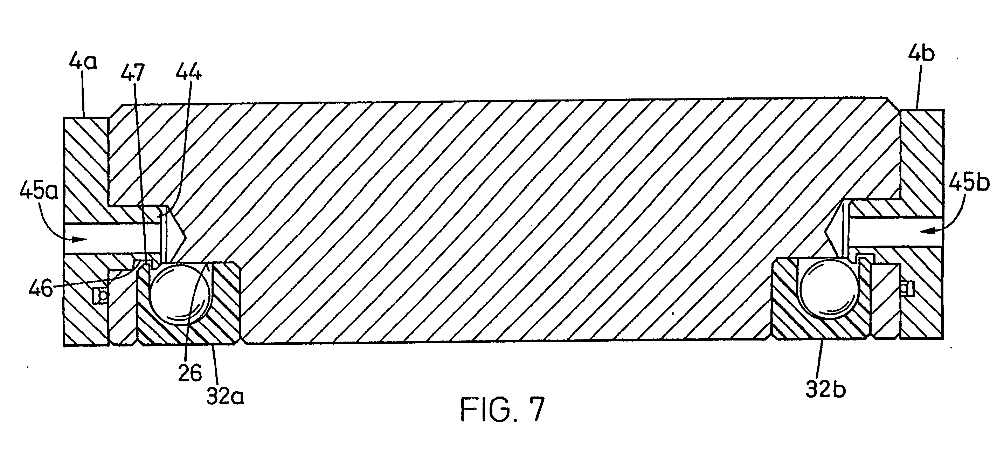

Fig. 7 zeigt, dass bei erfindungsgemässen Ausführungsformen zwischen den beiden baugleichen Deckplatte 4a, 4b und jedem der beiden Einsätze 32a, 32b auf jeder Seite des Wagens zwei Schnappverbindungen vorgesehen sein können. Jeder dieser Schnappverbindungen dienen in erster Linie zur Befestigung und exakten Positionierung des Abstreifers 41. Die jeweilige Schnappverbindung weist an der Deckplatte 4a, 4b an einer der Stirnseite des Grundkörpers 5 zugewandten Fläche einen zylindrischen Vorsprung 44 auf, durch den eine durchgehende Schmiermittelbohrung 45a, 45b verläuft (vgl. auch Fig.6), die jeweils in eine der Nutgrundflächen 26 mündet. An einer Aussenfläche des Vorsprungs ist ein Schlitz 46 vorhanden, in den eine Nase 47 des Einsatzes 32a, 32b eingreift, wodurch die Deckplatte am Grundkörper 5 fixiert wird.

## Patentansprüche

1. Wagen einer Linearbewegungsführung, welcher zur Anordnung auf einer Schiene vorgesehen ist, der einen Mittelabschnitt und zwei sich jeweils an den Mittelabschnitt anschliessende Schenkel aufweist, wodurch der Wagen im Querschnitt im wesentlichen U-förmig ausgebildet ist und eine zur vorgesehenen Längsbewegungsachse parallel verlaufende Ausnehmung aufweist, der Wagen im Bereich der beiden Schenkel zumindest jeweils einen Wälzkörperumlauf aufweist, wobei jeder Wälzkörperumlauf einen Rücklaufkanal, eine Tragzone sowie zwei den Rücklaufkanal und die Tragzone miteinander verbindende Umlenkkanäle aufweist, wobei zumindest ein Schenkel (3a, 3b) mit zumindest einer Nut (22a, 22b, 22c, 22d) versehen ist, und dass in die Nut (22a, 22b, 22c, 22d) ein Einsatz (32a, 32b) einfügbar ist, welcher Mittel zur Umlenkung der Wälzkörper (7) enthält, **dadurch gekennzeichnet, dass** die Nut (22a, 22b, 22c, 22d) im wesentlichen quer zur Ausnehmung verläuft.

2. Wagen nach Anspruch 1, **dadurch gekennzeichnet, dass** die Nut (22a, 22b, 22c, 22d) von zwei im wesentlichen orthogonal zur Längsbewegungsachse ausgerichteten Seitenflächen des Grundkörpers begrenzt wird.

3. Wagen nach einem der vorhergehenden Ansprüche, **dadurch gekennzeichnet, dass** jeder Schenkel (3a, 3b) zwei solche Nuten (22a, 22b, 22c, 22d) aufweist.

4. Wagen nach einem oder mehreren der vorhergehenden Ansprüche, **dadurch gekennzeichnet, dass** der Einsatz (32a, 32b) sowohl eine innere als auch eine äussere Führungsfläche (33, 34) der Umlenkung aufweist.

5. Wagen nach einem oder mehreren der vorhergehenden Ansprüche, **dadurch gekennzeichnet, dass** der zumindest eine Einsatz (32a, 32b) durch eine Schnappverbindung am Grundkörper (5) befestigbar ist.

6. Wagen nach Anspruch 5, **dadurch gekennzeichnet, dass** die Schnappverbindung ein am Einsatz (32a, 32b) angeordnetes Zentrierauge (39) sowie eine mit dem Rücklaufkanal fluchtende Ausnehmung aufweist.

7. Wagen nach einem oder mehreren der vorhergehenden Ansprüche, **dadurch gekennzeichnet, dass** der Einsatz (32a, 32b) Mittel zur Zentrierung gegenüber dem Rücklaufkanal und/oder der Tragzone des Wagens (11) aufweist.

8. Wagen nach einem oder mehreren der vorhergehenden Ansprüche, **dadurch gekennzeichnet, dass** der Einsatz (32a, 32b) mit einer Zentriernase (37) versehen ist, die gegen eine Innenseite eines Steges (27a, 27b, 27c, 27d) des Grundkörpers (5) anliegt, an der sich eine Stirnfläche (8) des Grundkörpers (5) befindet.

9. Wagen nach einem oder mehreren der vorhergehenden Ansprüche, **gekennzeichnet durch** eine Deckplatte (4a, 4b), an welcher ein Abstreifer (41) angeordnet ist, wobei die Deckplatte (4a, 4b) an einer Stirnseite des Grundkörpers (5) befestigbar ist.

10. Wagen nach Anspruch 9, **dadurch gekennzeichnet, dass** die Deckplatte (4a, 4b) mit einer Schnappverbindung an zumindest einem Einsatz (32a, 32b) befestigbar ist.

11. Wagen nach einem oder mehreren der vorhergehenden Ansprüche, **dadurch gekennzeichnet, dass** die Deckplatte (4a, 4b) an einem aufgrund der mindestens einen Nut (22a, 22b, 22c, 22d) ausgebildeten Steg (27a, 27b, 27c, 27d), vorzugsweise mittels einer Schnappverbindung, angebracht ist.

12. Wagen nach einem oder mehreren der vorhergehenden Ansprüche, **gekennzeichnet durch** einen Sicherungsbügel (17), der zur Rückhaltung der Wälzkörper (7) in der Tragzone vorgesehen ist, wobei der Sicherungsbügel (17) mit einem in der Tragzone angeordneten Rückhaltesteg (18) und zwei an den Stirnseiten des Grundkörpers eingreifenden Befestigungsstege (19) versehen ist.

## Claims

1. Carriage of a linear motion guide, which is provided for arrangement on a rail, which carriage has a center section and two legs connecting respectively to the center section, whereby the carriage is formed in cross section as substantially U-shaped and has a recess running parallel to the provided longitudinal motion axis, the carriage comprising at least one rolling body circulating path in a region of the two legs, respectively, whereby each rolling body circulating path has a return channel, a support zone, and two guide channels connecting the return channel and the support zone to one another, wherein at least one leg (3a, 3b) is provided with at least one groove (22a, 22b, 22c, 22d), and wherein in the groove (22a, 22b, 22d, 22d) an insert is insertable, comprising means for deflecting the rolling body (7), **characterized in that** the groove (22a, 22b, 22c 22d) is arranged essential transversely to the recess.

2. Carriage according to claim 1, **characterized in that** the groove (22a, 22b, 22c, 22d) is defined by two side surfaces of the base body oriented substantially orthogonally to the longitudinal motion axis.

3. Carriage according to one of the preceding claims, **characterized in that** each leg (3a, 3b) comprises two such grooves (22a, 22b, 22c, 22d).

4. Carriage according to one or more of the preceding claims, **characterized in that** the insert (32a, 32b) comprises an inner guide surface (33, 34) and an outer guide surface (33, 34) of the deflection.

5. Carriage according to one or more of the preceding claims, **characterized in that** the at least one insert (32a, 32b) is attachable to the base body (5) by means of a snap connection.

6. Carraige according to claim 5, **characterized in that** the snap connection comprises a centering eye (39) arranged on the insert (32a, 32b) and a recess aligned with the return channel.

7. Carriage according to one or more of the preceding claims, **characterized in that** the insert (32a, 32b) comprises means for centering relative to the return channel and/or the support zone of the carriage (11).

8. Carriage according to one or more of the preceding claims, **characterized in that** the insert (32a, 32b) is provided with a centering nose (37), which rests against an inner side of a bar (27a, 27b, 27c, 27d) of the base body, on which a front surface (8) of the base body (5) is located.

9. Carriage according to one or more of the preceding claims, **characterized by** a cover plate (4a, 4b), on which a scraper (41) is arranged, wherein the cover plate (4a, 4b) is attachable on a front side of the base body (5).

10. Carriage according to claim 9, **characterized in that** the cover plate (4a, 4b) is attachable to at least one insert (32a, 32b) with a snap connection.

11. Carriage according to one or more of the preceding claims, **characterized in that** the cover plate (4a, 4b)is mounted on a bar (27a, 27b, 27c, 27d) formed on the basis of the at least one groove, preferably by means of a snap connection.

12. Carriage according to one or more of the preceding claims, **characterized by** a safety clamp (17), which is provided in the support zone for retention of the at least one rolling body (7), wherein the safety clamp (17) is provided with a retention bar (18) arranged in the support zone and two attachment bars (19) engaged in the front sides of the base body.

## Revendications

1. Chariot d'un guidage linéaire, prévu pour être disposé sur un rail, présentant une section médiane et deux branches se raccordant respectivement sur la section médiane, par l'intermédiaire desquelles le chariot est sensiblement conçu en forme de U dans sa section transversale et présentant un évidement s'étendant à la parallèle de l'axe de déplacement longitudinal prévu, le chariot étant muni dans la zone des deux branches d'au moins respectivement un système de recirculation des corps de roulement, chaque système de recirculation des corps de roulement étant muni d'un canal de retour, d'une zone porteuse ainsi que de deux canaux de renvoi reliant le canal de retour et la zone porteuse, au moins une branche (3a, 3b) étant munie d'au moins une rainure (22a, 22b, 22c, 22d) et un insert (32a, 32b) contenant des moyens pour le renvoi des corps de roulement (7) étant insérable dans la rainure (22a, 22b, 22c, 22d), **caractérisé en ce que** la rainure (22a, 22b, 22c, 22d) s'étend sensiblement à la transversale de l'évidement.

2. Chariot selon la revendication 1, **caractérisé en ce que** la rainure (22a, 22b, 22c, 22d) est délimitée par deux surfaces latérales du corps de base, sensiblement orientées de façon orthogonale par rapport à l'axe de déplacement longitudinal.

3. Chariot selon l'une quelconque des revendications précédentes, **caractérisé en ce que** chaque branche (3a, 3b) est munie de deux rainures (22a, 22b, 22c, 22d) de ce type.

4. Chariot selon l'une quelconque ou plusieurs des revendications précédentes, **caractérisé en ce que** l'insert (32a, 3b) est muni aussi bien d'une surface de guidage interne et externe (33, 34) du système de renvoi.

5. Chariot selon l'une quelconque ou plusieurs des revendications précédentes, **caractérisé en ce que** l'insert qui est au moins au nombre de un (32a, 32b) peut être fixé sur le corps de base (5) par une liaison par encliquetage.

6. Chariot selon la revendication 5, **caractérisé en ce que** cette liaison par encliquetage est munie d'un mamelon de centrage (39) disposé sur l'insert (32a, 32b) et d'un évidement aligné sur le canal de retour.

7. Chariot selon l'une quelconque ou plusieurs des revendications précédentes, **caractérisé en ce que** l'insert (32a, 32b) est muni de moyens de centrage par rapport au canal de retour et/ou à la zone porteuse du chariot (11).

8. Chariot selon l'une quelconque ou plusieurs des revendications précédentes, **caractérisé en ce que** l'insert (32a, 32b) est muni d'une languette de centrage (37) qui s'applique contre une face interne d'une barrette (27a, 27b, 27c, 27d) du corps de base (5), sur laquelle se trouve une face frontale (8) du corps de base (5).

9. Chariot selon l'une quelconque ou plusieurs des revendications précédentes, **caractérisé par** une plaque de recouvrement (4a, 4b), sur laquelle est disposé un racleur (41), la plaque de recouvrement (4a, 4b) pouvant être fixée sur une face frontale du corps de base (5).

10. Chariot selon la revendication 9, **caractérisé en, ce que** la plaque de recouvrement (4a, 4b) peut être fixée par une liaison par encliquetage sur au moins un insert (32a, 32b).

11. Chariot selon l'une quelconque ou plusieurs des revendications précédentes, **caractérisé en ce que** la plaque de recouvrement (4a, 4b) est montée sur une barrette (27a, 27b, 27v, 27d) formée en raison de la rainure qui est au moins au nombre de une (22a, 22b, 22c, 22d), de préférence à l'aide d'une liaison par encliquetage.

12. Chariot selon l'une quelconque ou plusieurs des revendications précédentes, **caractérisé par** un étrier d'arrêt (17) destiné à retenir les corps de roulement (7) dans la zone porteuse, l'étrier d'arrêt (17) étant muni d'une barrette de retenue (18) disposée dans la zone porteuse et de deux barrettes de fixation (19) s'accrochant dans les faces frontales du corps de base.
